(19) Europäisches Patentamt
European Patent Office
Office européen des brevets

(11) EP 0 816 755 A2

(12) **EUROPÄISCHE PATENTANMELDUNG**

(43) Veröffentlichungstag:
07.01.1998 Patentblatt 1998/02

(51) Int. Cl.⁶: **F23D 11/40**, F23C 9/08

(21) Anmeldenummer: 97110289.2

(22) Anmeldetag: 24.06.1997

(84) Benannte Vertragsstaaten:
AT BE CH DE DK ES FI FR GB GR IE IT LI LU MC
NL PT SE

(30) Priorität: 25.06.1996 DE 19625216

(71) Anmelder: **Köhne, Heinrich**
52072 Aachen (DE)

(72) Erfinder:
• **Köhne, Heinrich**
52072 Aachen (DE)
• **Gitzinger, Heinz-Peter**
52064 Aachen (DE)

(54) **Verfahren und Konstruktion eines Vormischbrenners für gasförmige, flüssige und/oder staubförmige Brennstoffe**

(57)     Durch die Zumischung eines großen Rauchgasmassenstroms kann eine sich am Ende eines Flammenrohres (6) stabilisierende, großvolumige und schwach blau leuchtende Flamme erzeugt werden.

Durch die räumliche Trennung der Flammenzone vom Bereich der Gemischbildung wird eine vollständige Vormischverbrennung erreicht. Durch die homogene Gemischbildung werden Temperaturspitzen in der Flamme deutlich reduziert. Durch die Vergrößerung der Flammenzone wird die Leistungsdichte und somit die mittlere Temperatur der Flamme und damit die thermische Stickoxidbildung verringert.

Durch die Verringerung der Turbulenz der Strömung im Bereich der Flamme (Trennung von der turbulenten Gemischbildung) werden die Verbrennungsgeräusche erheblich reduziert.

**Beschreibung**

Gegenstand des Patents ist ein Brenner für gasförmige, flüssige oder staubförmige Brennstoffe, mit dem eine großvolumige Flammenzone im Bereich eines Brennkammereinsatzes stabilisiert werden kann, das erforderliche Konzept zur Gemischaufbereitung sowie die Betriebsweise des Brenners.

Die Technik der Vormischverbrennung ist Ziel vieler Entwicklungskonzepte moderner Brenner zum Beispiel im Kleinfeuerungsbereich. Hier geht der Trend hin zu sogenannten Blaubrennern, deren Flammen sich durch das weitgehende Fehlen des gelben Leuchtens von Rußpartikeln auszeichnen. Der Effekt wird durch die Zumischung von Rauchgasen in die Zone der Gemischbildung erreicht, wodurch die Verdunstung eines Teils der Brennstofftropfen (Hauptanwendungsgebiet sind zur Zeit Brenner für flüssige Brennstoffe) erreicht wird. Zusätzlich tritt eine gewisse Inertisierung dieses Mischbereichs ein. Daraus folgt, daß der Bereich der Flammenwurzel zum Teil oder weitgehend vom Bereich der Mischzone getrennt wird und ein homogeneres, vorgemischtes Brennstoff-Luft-Gemisch verbrannt werden kann. Die homogenere Verbrennung führt zum Abbau von Temperaturspitzen in der Flammenzone und damit zur Minderung der thermischen Stickoxidbildung.

Bei den bestehenden Systemen kann man jedoch nicht von rein vormischenden Systemen sprechen, da der Bereich der Gemischbildung und der Bereich der Flammenzone sich teilweise überlagern. Am Flammenbild ist dies durch gelbe Schlieren in der blauen Flamme zu erkennen. Eine vollständige Trennung beider Bereiche ist nicht möglich, da der dazu erforderliche hohe Rauchgasmassenstrom zu einer Schwächung der Stabilisierung der Flamme (z. B. in einem Flammenrohr) führt. Bei einem zu großen Rauchgasmassenstrom reißt die Flamme ab und die Steuerung des Brenners meldet eine Störung. Insbesondere ist auch der Start solcher Brenner problematisch, da aufgrund der niedrigeren Rauchgastemperaturen noch größere Rauchgasmassenströme durch den Impuls der Luft eingesaugt werden.

Ein weiterer Nachteil der Blaubrennersysteme ist deren erhöhte Geräuschemission, die durch den hohen Luftimpuls zur Einsaugung von Rauchgasen erzeugt wird.

Die Aufgabe der vollständigen Trennung der Bereiche der Gemischbildung und der Flammenzone wird erfindungsgemäß gelöst durch die Einkopplung eines im Vergleich zu Blaubrennern (Rezirkulationsverhältnis $r$ = rezirkulierter Abgasmassenstrom / Luftmassenstrom = kleiner 50 %, meist kleiner 30 %) großen Abgasmassenstroms (Rezirkulationsverhältnis von 0,3 bis 1,9).

Die Aufgabe der Flammenstabilisierung bei großen Rauchgasmassenströmen wird erfindungsgemäß gelöst durch die Zuführung der Rauchgase auf hohem Temperaturniveau und durch die Stabilisierung der Flamme im Bereich des Endes und / oder hinter dem sogenannten Flammenrohr (wie es bei Blaubrennern eingesetzt wird). Dieser Raum kann optional - insbesondere bei gekühlten Wanden - von einem Brennkammereinsatz gebildet werden. Der Flammenraum ist großvolumig und an einer schwach blau leuchtenden Flamme (Flammenbereich) zu erkennen.

Ein Verfahren mit noch größeren Rauchgasmassenströmen (Rezirkulationsverhältnis 2 bis 10) ist aus der Patentanmeldung EU 04 63 218 A1 bekannt. Bei diesem Verfahren der sogenannten flammenlosen Oxidation wird jedoch ein aufgrund des sehr großen Gesamtmassenstroms sehr großer Ausbrandraum benötigt. Das Anwendungsgebiet liegt vorzugsweise im Bereich von Feuerungen mit hoher Luftvorwarmung und hoher Abgastemperatur.

Die Zielsetzung der in dieser Anmeldung vorgestellten Vormischverbrennung liegt im Gegensatz zur flammenlosen Oxidation in der Erzeugung einer sichtbaren und somit unter anderem optisch detektierbaren Flammenzone mit niedriger Energiedichte (großvolumige Flamme) und insbesondere homogener Temperaturverteilung. Die Größe des Flammenbereiches liegt jedoch im Bereich der Ausbrandzone üblicher Kesselflammenräume und gestattet damit den Bau eines insgesamt relativ kompakten Wärmetauschers.

Ein Beispiel für die Ausführung eines Brenners im Sinne der Vormischverbrennung besteht aus einer zentralen Brennstofflanze, einer Luftzuführung, die mit einer Dralleinrichtung versehen sein kann, mit Zündelektroden, mit einer Vorrichtung zur veränderlichen Zuführung von Rauchgasen, mit einem Flammenrohr und einem Brennkammereinsatz.

Der Brenner arbeitet in zwei Betriebszuständen. Der Zustand I, der Startmodus, entspricht der bekannten Form einer drallunterstützten Flammenrohrstabilisierung. Dieser Betriebszustand dient nur zur Aufheizung des Systems auf die Mindest-Betriebstemperatur des Zustands II, und wird zeitlich kurz ausgelegt.

Die Innovation besteht in der Betriebsweise des Modus II, kombiniert mit einem Startmodus, da der Brenner im Modus II nicht ohne weiteres gestartet werden kann. Im Modus II arbeitet der Brenner als Vormischbrenner. Dazu wird eine - optional in ihrer Weite veränderliche - Öffnung im Bereich der Luftzuführung soweit vergrößert, daß durch den Impuls der zugeführten Luft ein relativ zu konventionellen Brennern sehr großer Rauchgasstrom eingesaugt wird.

Durch diesen zusätzlichen Volumenstrom stellt sich ein besonderes Strömungs- und Flammenbild ein. Das Flammenbild läßt sich als extrem weiche blaue Gasflamme beschreiben. Dies beruht aufmehreren Effekten:

1. Es erfolgt eine Beschleunigung der Strömung in axialer Richtung. Die Ursache liegt in der Einsaugung von Rauchgasen, die zum einen den Gesamtmassenstrom vergrößern und zum anderen durch den Eintrag von Wärme - die rückströmenden Rauchgase sind im Umkehrbetrieb sehr heiß - den Luftstrom aufheizen und damit den Gesamtvolumenstrom nochmals vergrößern. Da der Querschnitt des Flammenrohrs, den das Gemisch durchtritt, gleich bleibt erhöht sich die Geschwindigkeit der Strömung.

2. Es erfolgt eine Reduzierung des Sauerstoffpartialdrucks. Durch die Zumischung der Rauchgase, deren Sauerstoffgehalt wesentlich unter dem der zugeführten Luft liegt, sinkt der Anteil des Sauerstoffs im Gesamtstrom ab. Damit reduziert sich der Partialdruck des Sauerstoffs, wodurch die Geschwindigkeit der Elementarreaktionen der Verbrennung verringert wird.

Beide Effekte zusammen bewirken, daß sich die Reaktionszone stromabwärts im Flammenrohr verlagert und vergrößert wird. Dadurch entsteht im düsennahen Bereich des Flammenrohrs ein Raum, der für die homogene Mischung des Brennstoffs mit der Luft und den Rauchgasen und gegebenenfalls für die Verdunstung oder Vergasung des Brennstoffs zur Verfügung steht. Die Bedingung der räumlichen Trennung von Gemischaufbereitungs- und Verbrennungszone für eine vollständige Vormischverbrennung wird damit erfüllt.

3. Abbau der Turbulenz im Flammenbereich. Durch den eingesaugten großen Rauchgasmassenstrom baut sich der Drall der Strömung, der die Durchmischung der Luft und des Rauchgases bedingt, sehr schnell ab. Damit entfällt der Mechanismus der Drallunterstützung der Flammenstabilisierung. Die Flamme stabilisiert sich frei am Ende des Flammenrohres innerhalb des Brennkammereinsatzes. Durch den Abbau der Strömungsgeschwindigkeit in der Flammenzone gelingt eine erhebliche Reduzierung der Verbrennungsgeräusche.

Diese Art der Verbrennung bewirkt eine deutliche Reduzierung der Stickoxidemissionen. Dies gelingt durch die Homogenisierung und die Reduzierung der Flammentemperatur. Die Trennung der Bereiche Verbrennung und Gemischaufbereitung bewirkt die Vermeidung von Temperaturspitzen, wie sie in Bereichen fetten Gemisches (an Brennstofftropfen bzw. - partikeln) auftreten. Die Zumischung von Rauchgasen, die als Inertgas der Flamme Wärme entziehen, und die Vergrößerung der Reaktionszone bewirken die Reduzierung der Flammentemperatur.

Die Kohlenmonoxidemission bleibt aufgrund des gleichmäßigen und genügend hohen Temperaturniveaus sehr gering. Für flüssige Brennstoffe kann die Rußbildung vollständig unterdrückt werden.

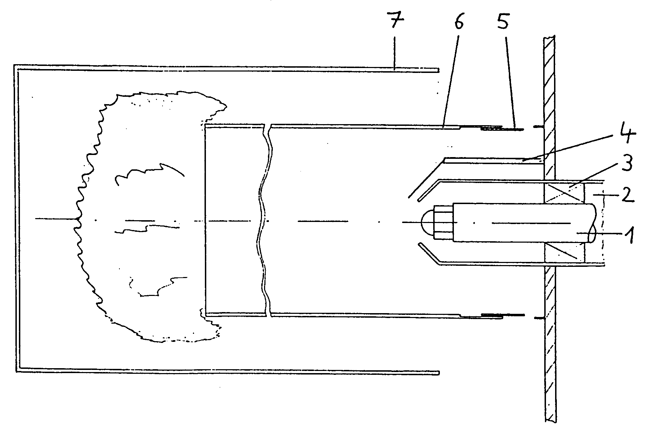

**Patentansprüche**

1. Verfahren und Konstruktion eines Vormischbrenners für gasförmige, flussige und / oder staubförmige Brennstoffe, dadurch gekennzeichnet, daß eine vollständige Trennung der Bereiche der Gemischbildung und der Flammenzone und eine großvolumige Flammenzone durch die Zuführung von Rauchgasen (Rezirkulationsverhältnis = rezirkulierter Abgasmassenstrom / Luftmassenstrom = 0,3 bis 1,9) hinter einem bei Blaubrennem sogenannten Flammenrohr.

2. Brenner für gasförmige, flüssige oder staubförmige Brennstoffe nach Anspruch 1, dadurch gekennzeichnet, daß optional, z. B. bei einer Kühlung des Brennraumes (z. B. wassergekühlter Kessel) der Bereich der Flammenzone und der Weg der Rückführung der Rauchgase ganz oder teilweise durch einen Brennkammereinsatz vor zu starker Auskühlung geschützt wird.

3. Brenner für gasförmige, flüssige oder staubförmige Brennstoffe nach Anspruch 1, dadurch gekennzeichnet, daß mit einer zentralen Brennstofflanze 1, mit einer Luftzuführung 2, mit einer optionalen Dralleinrichtung 3, mit einer Zündvorrichtung 4, mit einer Möglichkeit der optional variablen Zuführung von Rauchgasen 5, mit einem Flammenrohr 6 und einem Brennkammereinsatz 7 zur Stabilisierung der Flamme und zur Rückführung heißer Rauchgase gleichzeitig auch ein Brenner zum Start des Systems (Vorheizung) gebildet wird.

4. Brenner für gasförmige, flüssige oder staubförmige Brennstoffe nach Anspruch 1, dadurch gekennzeichnet, daß die Öffnung zur Zuführung der Rauchgase in ihrer Größe durch einen Schieber oder eine Platte frei eingestellt werden kann.

5. Brenner für gasförmige, flüssige oder staubförmige Brennstoffe nach Anspruch 1, dadurch gekennzeichnet, daß die Einstellung der Weite der Öffnung während des Betriebs an die Erfordernisse einer optimalen Verbrennung durch Temperaturfühler oder Bimetalle automatisch angepaßt werden kann.

6. Brenner für gasförmige, flüssige oder staubförmige Brennstoffe nach Anspruch 1, dadurch gekennzeichnet, daß die Qualität der Brennstoffzerstäubung relativ niedrig sein darf. Das Konzept gewährleistet dennoch eine gute Brennstoff-Luft-Gemischaufbereitung.

7. Brenner für gasförmige, flüssige oder staubförmige Brennstoffe nach Anspruch 1, dadurch gekennzeichnet, daß der Brenner in zwei Betriebszuständen arbeitet, wobei die Aggregate des Brenners in gleicher Weise für beide Betriebszustände genutzt werden können. Der Zustand I, der Startbetrieb, dient zur Aufheizung des Systems. Bei Erreichen einer erforderlichen Betriebstemperatur erfolgt der Übergang in den Zustand II, dem Dauerbetrieb.

8.  Brenner für gasförmige, flüssige oder staubförmige Brennstoffe nach Anspruch 1, dadurch gekennzeichnet, daß eine in weiten Bereichen modulierende Betriebsweise erreicht werden kann. Durch das Konzept der von der Verbrennung getrennten Gemischbildung gewährleistet der Brenner eine genügend gute Gemischbildung auch bei kleinen Leistungen (geringe Mischenergie durch geringen Luftmassenstrom).